# EUROPEAN PATENT APPLICATION

(11) **EP 1 985 182 A2**
(43) Date of publication of application: **29.10.2008**
(21) Application number: 07012770.9
(22) Date of filing: 29.06.2007
(51) Int. Cl.: A01N 65/00, A01P 17/00

(54) **Method for preparing and using pest repellent on harvested plants**

(30) Priority: 25.04.2007 CN 200710097967
(71) Applicant: Food Industry Research and Development Institute, Hsinchu (TW)
(72) Inventor: Liu, Tin-Yin, Hsinchu, Taiwan R.O.C. (TW); Wang, Yi-Kai, Hsinchu, Taiwan R.O.C. (TW); Lu, Mei-Ling, Hsinchu, Taiwan R.O.C. (TW)
(74) Representative: Schildberg, Peter

(57) **Abstract**

The present invention relates to a method of preparing pest repellent for harvested plants, a method of processing agricultural harvested products, a method of treating vegetable waste, a method for producing a cleansing composition for pest repellent and a cleansing composition for pest repellent. The method of preparing pest repellant comprises providing plants, collecting parts of the plants, obtaining an extract from the parts of the plants, and applying the extract to the harvested plants. The method for processing agricultural harvested products comprises providing harvested agricultural products, collecting parts of the harvested agricultural products, obtaining an extract from the parts of the harvested agricultural products and applying the extract to clean the harvested agricultural products.

## Description

### BACKGROUND OF THE INVENTION

### Field of the Invention

The present invention relates to a method for preparing and using pest repellent on harvested plants, especially a method for preparing pest repellent for use on shredded vegetables

### Description of the Related Arts

Cultivated plants (e.g. fruit, vegetables and the like) for food are often damaged by pests. Before the advent of pesticides, methods of controlling pests such as caterpillars was to remove the pests by hand or spraying parts of resistant plants on cultivated plants. People used natural fungicides to control plant diseases until chemical pesticides were invented in the 20^{th} century. Because using pesticide is economic, convenient and effective, people use huge amounts of pesticide that has significant disadvantages.

According to an investigation, 84% of Americans would prefer to buy vegetables grown without pesticide. However, organic cultivation of food cannot meet the demands of a growing population growth. Many methods for achieving balance between use of pesticides and plant disease control have been proposed, for example Integrated Pest Management (IPM), and the goal is to decrease the use of pesticides. Many tropical and subtropical regions have weather that is hot and humid and have a high incidence of plant diseases that are often complex. Therefore, maintaining healthy plants without pesticides is tedious and difficult. Therefore, natural techniques for eliminating pests will affect the sale of ready-to-eat or ready-to-cook products, and there is still a need for providing a natural technique for eliminating pests.

### SUMMARY OF THE INVENTION

An important objective of the present invention is to provide a nontoxic pest repellent that allows cultivated crops to be treated with the repellent without harmful side effects to consumer as would be the case with most known chemical repellents.

To achieve the objective, the present invention relates to a method of preparing a pest repellent for harvested plants, a method of processing agricultural harvested products, a method of treating vegetable waste, a method for producing a cleansing composition for pest repellent and a cleansing composition for pest repellent. The method of preparing pest repellant comprises providing plants, collecting parts of the plants, obtaining an extract from the parts of the plants, and applying the extract to the harvested plants. The method for processing agricultural harvested products comprises providing harvested agricultural products, collecting parts of the harvested agricultural products, obtaining an extract from the parts of the harvested agricultural products and applying the extract to clean the harvested agricultural products.

Other objectives, advantages and novel features of the invention will become more apparent from the following detailed description when taken in conjunction with the accompanying drawings.

### DETAILED DESCRIPTION OF THE INVENTION

The present invention relates to a method of preparing pest repellent for harvested plants, a method of processing agricultural harvested products, a method of treating vegetable waste, a method for producing a cleansing composition for pest repellent and a cleansing composition for pest repellent.

The method of preparing a pest repellent for harvested plants comprises steps of collecting parts of harvested plants, such as leaves, roots, stems, flowers, fruits, peels or inedible parts of the harvested products, cutting and soaking the collected parts in a suitable solution by a juicer to obtain a cleanser composition and cleaning the harvested plants by soaking, washing or stirring in the cleanser composition. The pests may be stimulated and relaxed by the cleanser composition and then leave the harvested plants. Therefore, less chemical cleanser is used for clean the harvested plants.

The term "harvested plants" as used herein refers to vegetable farm-products, such as vegetables or fruit. In a preferred embodiment, vegetables may be roots, stems, leaves, flowers or fruit. In a more preferred embodiment, examples of vegetables may be crucifer plants including cabbages, cauliflower, lettuce, Chinese cabbage, broccoli, canola and others, and shredded vegetables including Chinese cabbage, rape, Chinese mustard, cabbage, celery, spinach, crown daisy chrysanthemum, green onion or leeks.

The term "pests" or "worms" as used herein refers to organisms that eat vegetables as food, such as insects, aphids, mealworms or snails.

The term "inedible parts" as used herein refers to parts of plants or vegetables that are not usually used as food, such as roots, old or damaged ' leaves or stems of vegetable, for example, leaves of broccoli or cauliflower.

The term "extract" as used herein refers to a substance or composition obtained from a plant or plant part source, regardless of whether the substance or composition is found external to the plant (i.e., an exudate), is found within the plant or plant part but external to the cells thereof, or is found within the cells of the plant. Chemical and/or physical action, as would be understood in the art, may be required to obtain the substance or composition from the plant or plant part.

A method in accordance with the present invention for preparing and using pest repellent for harvested plants comprises steps of providing harvested plants, collecting parts of the harvested plants, obtaining an extract from the parts of the harvested plants and applying the extract to harvested plants.

In the step of collecting part of the plants, the parts of the plants are preferably whole plants, roots, stems, leaves, flowers or fruit, and are more preferably the leaves are old leaves or damaged leaves.

In the step of obtaining an extract, the extract is preferably further filtered for use, the extract is more preferably further diluted for use, and the extract is most preferably diluted to a 1:50 concentration.

Preferably, the step of applying the extract to harvested plants comprises soaking, washing or stirring the harvested plants, and more preferably comprises stirring.

Preferably, the harvested plants comprise one or more kinds of plants.

The method for processing agricultural harvested products in accordance with the present invention comprises providing harvested agricultural products, collecting parts of the harvested agricultural products, obtaining an extract from the parts of the harvested agricultural products and cleaning the harvested agricultural products by using the extract.

Preferably, the parts of the agricultural harvested products are whole plants, roots, stems, leaves, flowers or fruits, more preferably, leaves are old leaves or damaged leaves.

Preferably, the extract is preferably further filtered for use, the extract is more preferably further diluted for use, and the extract is most preferably diluted to a 1:50 concentration.

Preferably, the step of applying the extract to harvested plants comprises soaking, washing or stirring the harvested plants, and more preferably comprises stirring.

An aspect of the present invention relates to a method for treating vegetable waste. The method comprises providing a vegetable waste, extracting the vegetable waste to obtain a solid waste and an extract, recycling the extract, and burying the solid waste.

Preferably, leaves are old leaves or damaged leaves.

An aspect of the present invention relates to a method for producing a cleansing composition for pest repellent. The method comprises providing plants, collecting parts of the plants, extracting the parts of the plants to obtain an extract, and recycling the extract to produce the cleansing composition.

Preferably, the parts of the plants are whole plants, roots, stems, leaves, flowers or fruits, more preferably, the extract is further filtered for use, more preferably, the extract is further diluted for use, most preferably, the extract is diluted to 1: 50 concentration.

An aspect of the present invention relates to a cleansing composition for pest repellent.

### EXAMPLES

The following examples are intended to assist the reader in practicing the invention and are not intended to be limiting in any way.

In preparation for the experiments performed in the examples, commercial broccoli and cauliflower were randomly selected and used as models. Worms on the broccoli and cauliflower were counted, and a mean value was obtained.

**Table 1. Worms on broccoli and cauliflower (counted in a rainy day, triplet counted)**

| | Means value |
|---|---|
| Cauliflower | 55 |
| Broccoli | 9 |

With reference to table 1, harvested vegetables have many pests such as insects and worms, and the number of the pests depends on the weather (i.e. sunny, cloudy or rainy). The amount of pesticide that must be used on vegetables will significantly increase on rainy days. Therefore, combining an effective method of using a pest repellant with pesticide to remove the pests may decrease the amount of pesticide that must be used on vegetables.

### EXAMPLES

### Example 1: Preparation a cleanser from cauliflower and broccoli

### 1.1 Preparation method

50 g of old and damaged leaves or stems of cauliflower and broccoli were taken and collected in a container; and 500ml water was added to the container. The old or damaged leaves and stems and water were cut and ground and centrifuged at 1000 to 2000 rpm for 2 minutes or more and filtered to obtain a vegetable cleanser.

### 1.2 Method for cleaning

2 liters of water was added to the vegetable cleanser to dilute the vegetable cleanser to a 1:50 concentration. A desired vegetable was put into the diluted vegetable cleanser for cleaning. The method of cleaning may be soaking, washing or stirring, and stirring is preferred. The stirring rate is about 100 to 110 rpm, and 105 rpm is preferred. The results of pest repellent were recorded.

### 1.3 Results

**Table 2. Results of different methods of removing pests (Each treatment contained 5 worms)**

| Treatment/time | Control (water) | *Oiltea camellia* seed extract (1:200 dilution) | Vegetable cleanser of the present invention (1:50 dilution) |
|---|---|---|---|
| 29 seconds | | 1 | |
| 30 seconds | | | 3 (1 floated and 2 sank) |
| 1' 17" | | | 1 (sank) |
| 1' 20" | 1 (floated) | | |
| 3'10" | | | 1 (sank) |

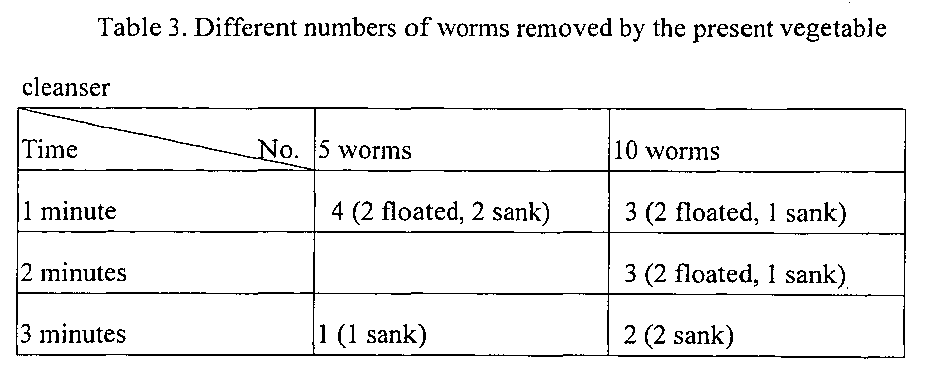

Observation of worms that floated and sank refers to removing the pests on vegetables. Based on the results recorded in Table 3, 80% to 100% worms were removed in 3 minutes.

Furthermore, the present invention estimates effectiveness of different cleaning methods. Vegetables that were cleaned by water were taken as check. The results show that the stirring method for cleaning may save time and in effective.

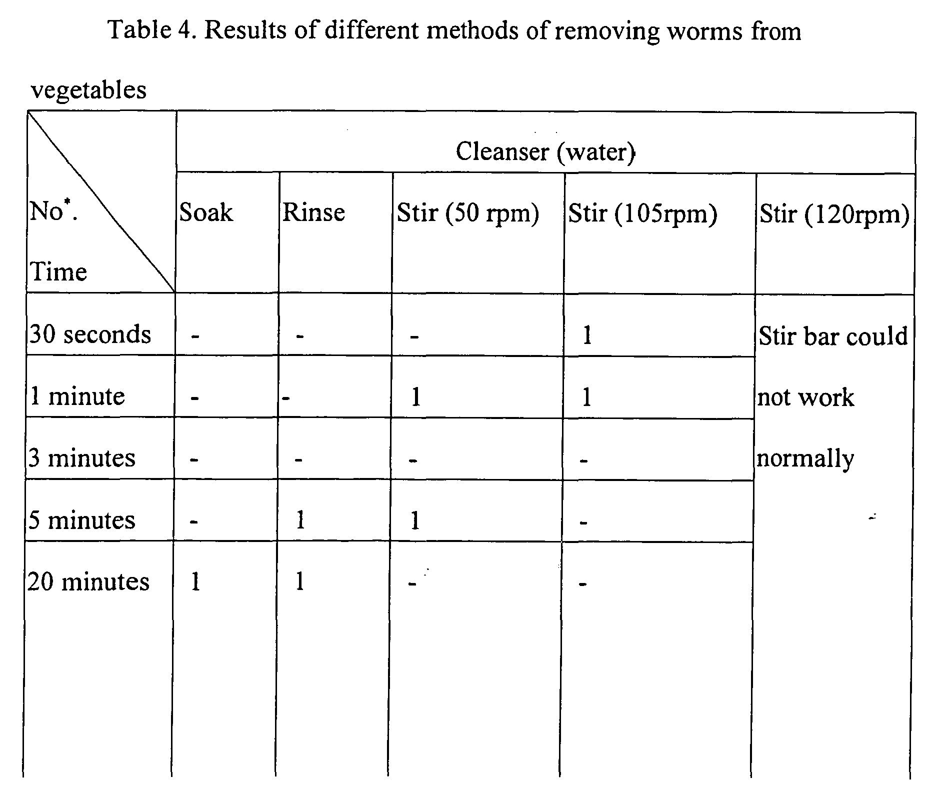

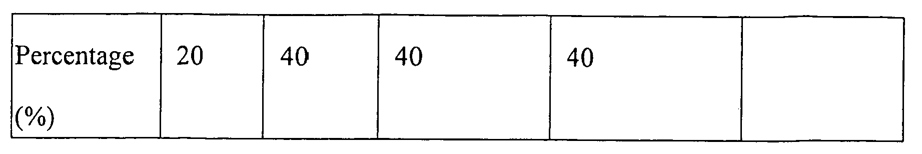

According to the present invention, the pests could be removed by inducing by the vegetable cleanser. Therefore, the harvested plants have no pests on them. Further, the vegetable cleanser may include more than one kind vegetable to clean various vegetables. Because the vegetable cleanser composition is prepared from the agricultural discard, such as old leaves, damaged leaves, peel, stems of the harvested plants, the above parts of harvested plants are further cutting, grinding and filtering, and the volume of the agricultural discard is decreased. The cut agricultural discard could be further used for fertilizer to increase fertility of soil.

Furthermore, the present invention is useful in a fruit and vegetable processing factory. Because many vegetables and fruits are processed in a factory for preparing salad and the first step is to remove uneatable parts of the fruits or the vegetables. Therefore, the uneatable parts could be collected for preparing the vegetable cleanser composition. Then the obtained vegetable cleanser composition may be diluted to 1: 50 concentration by stirring clean the fruits or the vegetables. Finally, until the pests are removed on the fruits or the vegetables, the cleaned fruits or the cleaned vegetables could be further package for eat (such as salad). According to the present invention, fruits and vegetables for export could be cleaned easily by induction without chemical residual and improve the value of agricultural products.

While the present invention is particularly shown and described with reference to the preferred embodiment(s) thereof, it will be understood by those skilled in the art that various changes in form and details may be made without departing from the spirit and scope of the invention.

## Claims

1. A method for removing pest for harvested plants, comprising:
providing harvested plants,
collecting parts of the harvested plants,
extracting the parts of the harvested plants to obtain an extract, and
cleaning the harvested plants by the extract.

2. The method as claimed in claim 1, wherein the parts of the harvested plants are whole plants, roots, stems, leaves, flowers or fruits.

3. The method as claimed in claim 2, wherein leaves are old leaves or damaged leaves.

4. The method as claimed in claim 1, wherein the extract is further filtered for use.

5. The method as claimed in claim 4, wherein the filtered extract is further diluted for use.

6. The method as claimed in claim 5, wherein the extract is diluted to a 1: 50 concentration.

7. The method as claimed in claim 1, wherein the harvested plants are cleaned by soaking, washing or stirring.

8. The method as claimed in claim 7, wherein the plants are cleaned by stirring.

9. The method as claimed in claim 8, wherein the plants comprise one or more kinds of plants.

10. A method for processing agricultural harvested products, comprising
providing harvested agricultural products,
collecting parts of the harvested agricultural products,
extracting the parts of the harvested agricultural products to obtain an extract, and
cleaning the harvested agricultural products by the extract.

11. The method as claimed in claim 10, wherein the parts of the harvested agricultural products are whole plants, roots, stems, leaves, flowers or fruits.

12. The method as claimed in claim 11, wherein leaves are old leaves or damaged leaves.

13. The method as claimed in claim 12, wherein the extract is further filtered for use.

14. The method as claimed in claim 13, wherein the extract is further diluted for use.

15. The method as claimed in claim 14, wherein the extract is diluted to 1: 50 concentration.

16. The method as claimed in claim 14, wherein the harvested agricultural products are cleaned by soaking, washing or stirring.

17. The method as claimed in claim 16, wherein the harvested agricultural products are cleaned by stirring in the extract.

18. A method for treating vegetable or fruits waste, comprising:
providing a vegetable or fruits waste,
extracting the vegetable or fruits waste to obtain a solid waste and an extract,
recycling the extract, and
burying the solid waste.

19. The method as claimed in claim 18, wherein vegetable wastes are old leaves or damaged leaves of the vegetable.

20. A method for producing a cleansing composition for pest repellent, comprising:
providing plants,
collecting parts of the plants,
extracting the parts of the plants to obtain an extract, and
recycling the extract to produce the cleansing composition.

21. The method as claimed in claim 20, wherein the parts of the plants are whole plants, roots, stems, leaves, flowers or fruits.

22. The method as claimed in claim 21, wherein the extract is further filtered.

23. The method as claimed in claim 22, wherein the extract is further diluted with water.

24. The method as claimed in claim 23, wherein the extract is diluted to 1:50 concentration.

25. A cleansing composition for pest repellent that is prepared by any one of claim 20 to 24.
